# EUROPEAN PATENT SPECIFICATION

(11) **EP 2 998 205 B1**
(45) Date of publication and mention of the grant of the patent: **04.04.2018**
(21) Application number: 15185087.2
(22) Date of filing: 14.09.2015
(51) Int. Cl.: B62J 6/00

(54) **WARNING LAMP FOR A BICYCLE**
WARNLEUCHTE FÜR EIN FAHRRAD
LAMPE DE SIGNALISATION POUR UNE BICYCLETTE

(30) Priority: 18.09.2014 TW 103132281
(43) Date of publication of application: 23.03.2016
(73) Proprietor: Z.J. Co., Ltd., Taipei City (TW)
(72) Inventor: Liu, Zi-Ju, Taoyuan City (TW)
(74) Representative: Lang, Christian

(56) References cited:
- EP-A1- 2 189 358
- US-A1- 2011 051 442
- US-B1- 7 377 673
- US-B1- 7 481 560

## Description

### 1. Field of the Invention

The present invention relates to a lamp and, more particularly, to a warning lamp mounted on a bicycle handlebar.

### 2. Description of the Related Art

Conventional bicycles normally have front light and back light for front and rear illumination. However, there is no warning lamp available to the conventional bicycles for alert upon making a turn, thus posting a threat against nighttime safety of cyclists and pedestrians in the neighborhood of the cyclists.

As disclosed in EP 2189358, entitled "A turning signal light integrated grip", the invention proposes a turning-light integrated grip for bikes. Its main features comprises: (1) An invisible wiring is hidden inside the grip (10), and (2) The turning signal light module is hidden and protected inside a corresponding outer ring (30) so that aesthetic merits can be reached. (3) Automatic power-off electrical function makes the product more practical for users.

As disclosed in US 7,481,560, entitled "Handgrip with lamp apparatus for bicycle", a handgrip for bicycle includes a body including a first end, a second end, and a light reflection portion covering thereon between the first and second ends, a sheath mounted on the light reflection portion, a lamp device installed on an end of the sheath adjacent to the second end of the body, and a switch device installed to the body and electrically connected to the lamp device.

The present invention is provided by appended claim 1. Beneficial embodiments are provided in the dependent claims. Accordingly, an objective of the present invention is to provide a warning lamp mounted on each of the two handlebars of a bicycle as a direction indicator light.

To achieve the foregoing objective, the bicycle warning lamp is mounted on each of two handlebars of a bicycle, wherein each handlebar has a hollow bar, a connection end and a free end, the connection end is connected to a frame of the bicycle, and the free end is opposite to the connection end. The warning lamp includes a body, a circuit board, two light-emitting units, a power supply and a control switch.

The body has a holding portion and a cap portion.

The holding portion is adapted to mount around the hollow bar of each handlebar of the bicycle and has an inner end and an outer end. The inner end is adapted to correspond to the connection end of the handlebar. The outer end is adapted to correspond to the free end of the handlebar.

The cap portion is connected with the outer end of the holding portion of the body and has a mounting chamber defined inside the cap portion.

The circuit board is mounted inside the mounting chamber of the cap portion.

The two light-emitting units are mounted inside the mounting chamber and are electrically connected to the circuit board.

Two see-through portions are oppositely formed on a periphery of the cap portion for light emitted from the two light-emitting units in the mounting chamber to pass through the see-through portion and direct to a forward direction and a back direction. Each light-emitting unit has a flexible printed circuit (FPC) board and multiple light-emitting diodes mounted on the FPC board.

The power supply is electrically connected to the circuit board to supply power to and light up the two light-emitting units.

The control switch is mounted on the holding portion of the body and is electrically connected to the circuit board to control the light-emitting units to turn on or off.

Preferably, the holding portion has multiple sleeves made of metal, inserted into the holding portion through the outer end, extending inwards, and internally threaded. The cap portion has multiple bands formed on an inner wall of the cap portion with multiple through holes respectively formed through the multiple bands and corresponding to the multiple sleeves. Multiple screws are mounted through the through holes of the multiple bands and the sleeves to securely mount the cap portion on the outer end of the holding portion.

Preferably, the holding portion has two ring-shaped seals formed on and protruding from an inner wall of the holding portion and being respectively adjacent to the inner end and the outer end of the holding portion for preventing water from entering the body through the inner end of the holding portion and through an junction between the holding portion and the cap portion.

Preferably, the control switch is mounted on the holding portion and is adjacent to the inner end of the holding portion.

Preferably, the warning lamp further includes a socket connector mounted on the cap portion and electrically connected to the power supply through the circuit board to further connect to another socket connector for charging the power supply.

The purpose of the warning lamp is to mount the warning lamp on each of the two handlebars of a bicycle for a cyclist to turn on one of the light-emitting units as a direction indicator light upon making a turn, such that the cyclists, drivers and pedestrians ahead of or behind the bicycle can be alerted to enhance safety in cycling.

Other objectives, advantages and novel features of the invention will become more apparent from the following detailed description when taken in conjunction with the accompanying drawings.

### IN THE DRAWINGS

Fig. 1 is a perspective view of a first embodiment of a warning lamp in accordance with the present invention mounted on each handlebar of a bicycle;
Fig. 2 is an enlarged perspective view of the warning lamp in Fig. 1;
Fig. 3 is an exploded perspective view of the warning lamp in Fig. 2;
Fig. 4 is an exploded perspective view of a holding portion and a cap portion of the warning lamp in Fig. 2 assembled together by threaded connection;
Fig. 5 is a side view of the warning lamp in Fig. 2;
Fig. 6 is a functional block diagram of the warning lamp in Fig. 2;
Fig. 7 is a schematic diagram of a second embodiment of a warning lamp in accordance with the present invention; and
Fig. 8 is another schematic diagram of the warning lamp in Fig. 7.

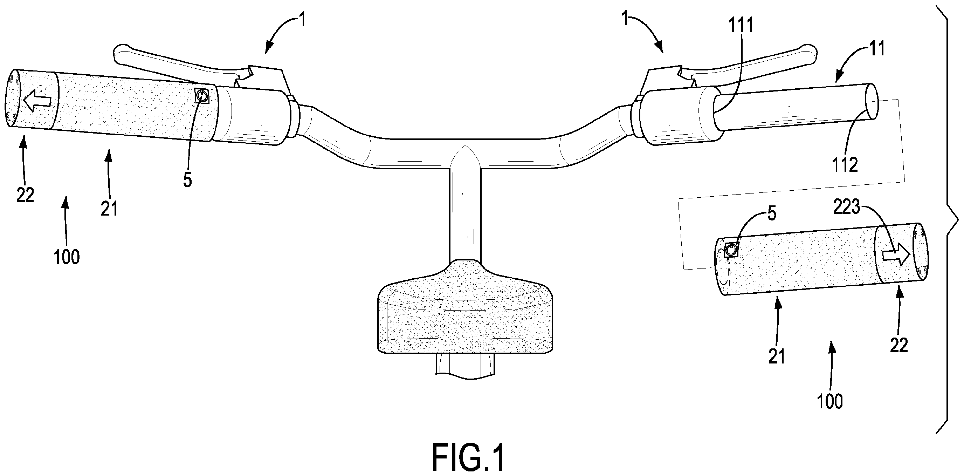

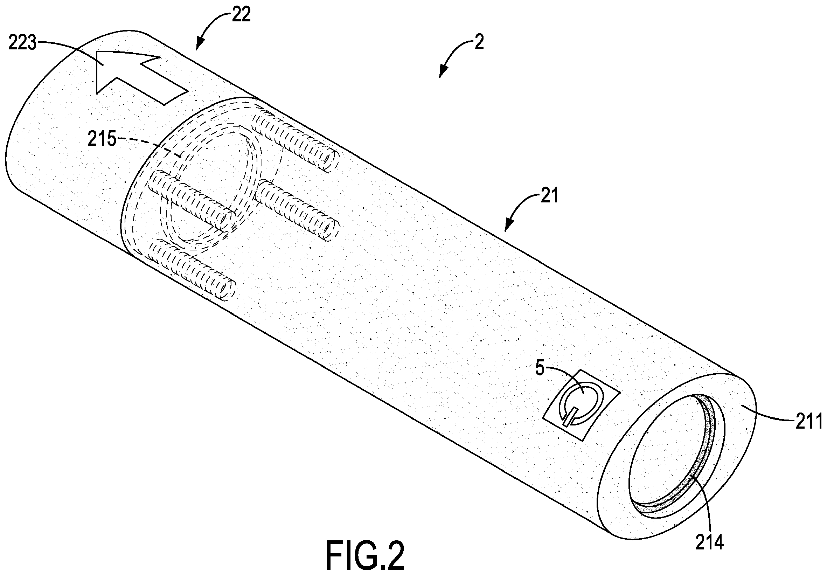

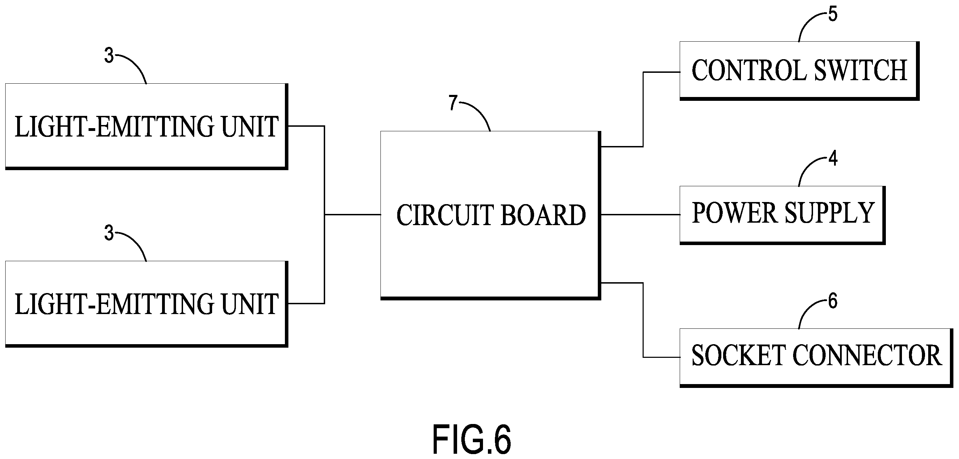

With reference to Figs. 1, 2 and 6, a warning lamp for a bicycle 100 in accordance with the present invention is mounted on each of the two handlebars 1 of a bicycle. Each handlebar 1 has a hollow bar 11, a connection end 111, and a free end 112. The connection end 111 is connected to a frame of the bicycle. The free end 112 is opposite to the connection end 111 and has an opening. The warning lamp 100 includes a body 2, a circuit board 7, two light-emitting units 3, a power supply 4, a control switch 5 and a socket connector 6. In the present embodiment, the warning lamp 100 illustrated in Figs. 2, 3 and 4 is mounted on the handlebar 1 on the left. The difference between the warning lamp 100 mounted on the handlebar on the left and the handlebar on the right resides in the position of the control switch 5 where is located to be easily pressed the left thumb and right thumb.

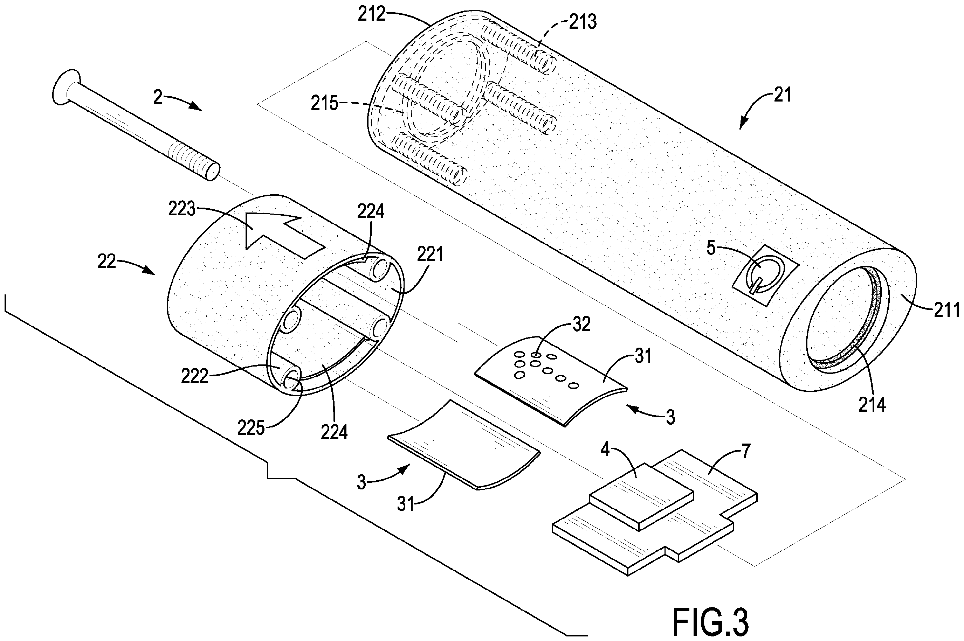

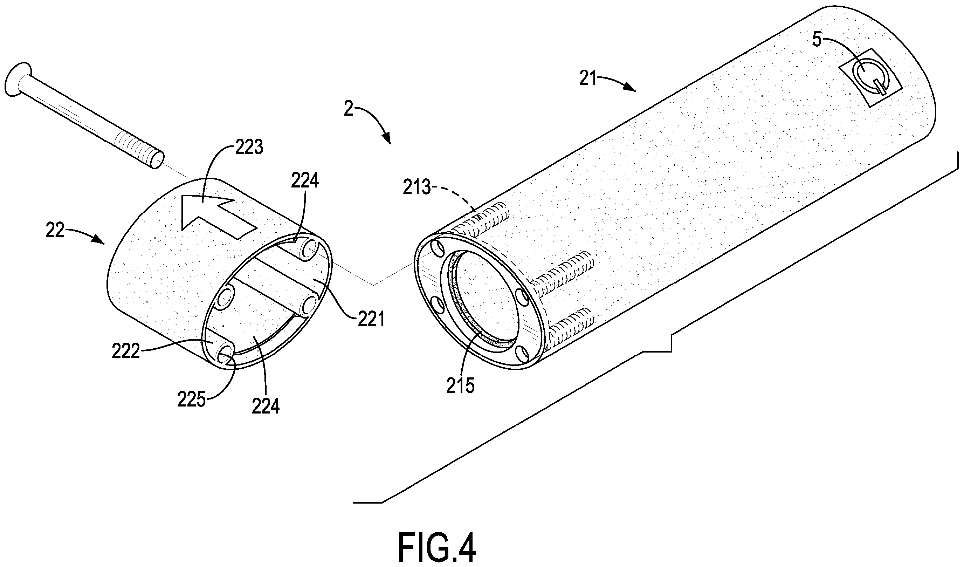

With reference to Figs. 3 and 4, the body 2 is elliptic cylindrical and has a holding portion 21 and a cap portion 22. The holding portion 21 is integrally formed, is mounted around the handlebar 1 on the left, and has an inner end 211, an outer end 212, multiple sleeves 213 and two ring-shaped seals 214, 215. The inner end 211 corresponds to the connection end 111 of the handlebar 1. The outer end 212 corresponds to the free end 112 of the handlebar 1. The multiple sleeves 213 are made of metal, are inserted into the holding portion 21 through the outer end 212 and extend inwards, and are internally threaded. The two ring-shaped seals 214, 215 are formed on and protrude from an inner wall of the holding portion 21 and are respectively adjacent to the inner end 211 and the outer end 212 of the holding portion 21 for preventing water from entering the body 2 through the inner end 211 of the holding portion 21 and through an junction between the holding portion 21 and the cap portion 22. The cap portion 22 has a mounting chamber 221 and multiple bands 222. The mounting chamber 221 is defined inside the cap portion 22. The multiple bands 222 are formed on an inner wall of the cap portion 22 with multiple through holes 225 respectively formed through the multiple bands 222 and corresponding to the multiple sleeves 213. Multiple screws are used to mount through the through holes 225 of the multiple bands 222 and the sleeves to securely mount the cap portion 22 on the outer end 212 of the holding portion 21.

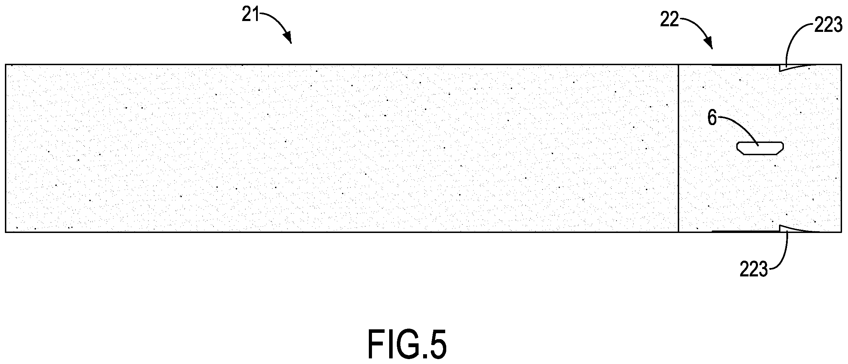

The circuit board 7 is mounted inside the mounting chamber 221 of the cap portion 22 of the body 2. Each light-emitting unit 3 includes a flexible printed circuit (FPC) board 31 and multiple light-emitting diodes (LEDs) 32 mounted on the FPC board 31. The cap portion 22 further has two partition plates 224 and two see-through portions 223. Each partition plate 224 is mounted inside the cap portion 22 to define an insertion room in the mounting chamber 221 and between the inner wall of the cap portion 22 and the partition plate 224 for one of the FPC board 31 to be mounted therein. The two see-through portions 223 are oppositely formed on the periphery of the cap portion 22 and are adjacent to the respective FPC boards 32. Each see-through portion 223 takes the form of an arrow symbol. The LEDs on the FPC board 31 are arranged to take the form of an arrow corresponding to that of a corresponding see-through portion 223, such that light emitted from the LEDs on the two FPC boards 31 is oppositely directed to the see-through portions 223. In other words, light emitted from the LEDs is directed to a front direction and a back direction. Specifically, the FPC boards 31 can be bent and mounted on the inner wall of the cap portion 22 according to the curvature of the inner wall to make the LEDs on the FPC boards 31 closely attached to and aligning with the see-through portions 223. The two see-through portions 223 are respectively located on two surfaces with smaller curvatures (more flat surfaces) of the elliptic cylindrical of the body 2. When the warning lamp 100 is mounted around the handlebar 1, the two see-through portions 223 are adjusted to face a front direction and a back direction for pedestrians, cyclists and drivers ahead of or behind the bicycle to see light emitting from the see-through portions 223 and to be alerted. The cap portion 22 is made of a light-passing material and may be fully transparent or partially transparent. The power supply 4 is mounted on electrically connected to the circuit board 7 to supply power to and light up the light-emitting units 3. The control switch 5 is mounted on the holding portion 21, is electrically connected to the circuit board 7 to control the light-emitting units 3 to turn on or off, and is adjacent to the inner end 211 of the holding portion 21 for a corresponding thumb of a cyclist to easily press the control switch 5. With reference to Fig. 5, the socket connector 6 is mounted on the cap portion 22 and is electrically connected to the power supply 4 through the circuit board 7 so as to connect to another socket connector for charging the power supply 4. Specifically, the socket connector 6 complies with the universal serial bus (USB) transmission standard and may be connected to a mobile power bank for charging the power supply 4. In the present embodiment, the power supply 4 is a rechargeable battery. The power supply 4 may be a disposable battery and the socket connector 6 can be ignored.

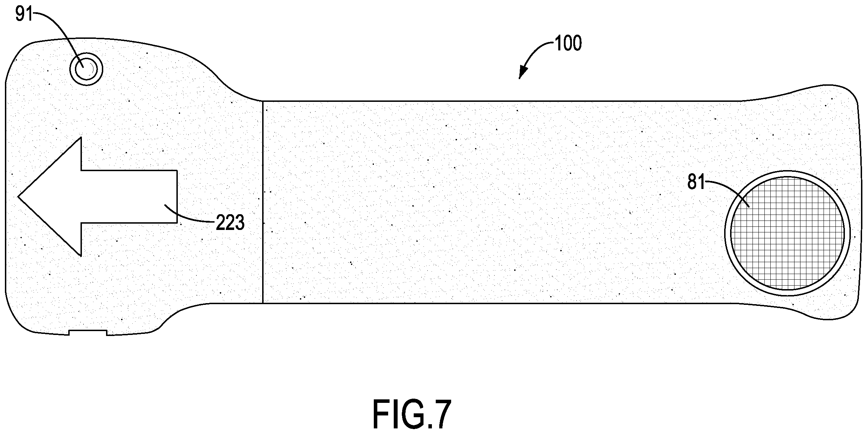

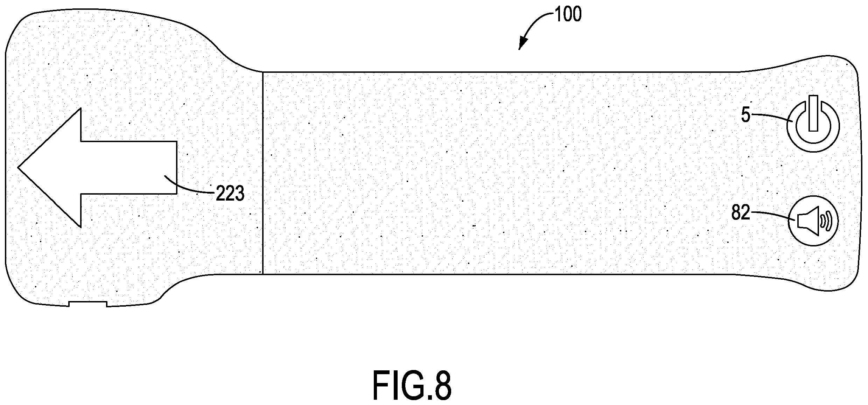

With reference to Figs. 7 and 8, a second embodiment of a warning lamp 100 in accordance with the present invention is shown. The warning lamp 100 further has a speaker 81, a sound switch 82 and a camera 91. The speaker 81 is mounted on the holding portion 21 of the body, is adjacent to the inner end 211 of the holding portion 21, and is electrically connected to the circuit board 7. The sound switch 82 is mounted on the holding portion 21, is adjacent to the inner end 211 of the holding portion 21, and is electrically connected to the circuit board 7. When the sound switch 82 is pressed, an alert sound announcing procedure built in the circuit board is initiated to send out an alert sound to warn surrounding people. When the sound switch 82 is released, the alert sound announcing procedure is terminated to stop sending out the alert sound. The camera 91 is mounted on the cap portion 22 of the body 2 of one of the two warning lamps 100 mounted on the two handlebars 1 to record surrounding environment upon cycling.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the scope of the appended claims are expressed.

## Claims

1. A bicycle warning lamp adapted to be mounted on each of two handlebars (1) of a bicycle, wherein each handlebar (1) has a hollow bar (11), a connection end (111) and a free end (112), the connection end (111) is connected to a frame of the bicycle, and the free end (112) is opposite to the connection end (111), **characterized in that** the warning lamp comprising:
a body (2) having:
a holding portion (21) adapted to mount around the hollow bar (11) of each handlebar (1) of the bicycle and having:
an inner end (211) adapted to correspond to the connection end (111) of the handlebar (1); and
an outer end (212) adapted to correspond to the free end (112) of the handlebar (1); and
a cap portion (22) connected with the outer end (212) of the holding portion (21) of the body (2) and having:
a mounting chamber (221) defined inside the cap portion (22);
two partition plates (224), each partition plate (224) mounted inside the cap portion (22) to define an insertion room in the mounting chamber (221) and between the inner wall of the cap portion (22) and the partition plate (224); and
two see-through portions (223) oppositely formed on a periphery of the cap portion;
a circuit board (7) mounted inside the mounting chamber (221) of the cap portion (22);
two flexible printed circuit (FPC) board (31), each FPC board mounted inside the one of the two insertion rooms in the cap portion (22), electrically connected to the circuit board (7), and having multiple light-emitting diodes (LEDs) (32) mounted on the FPC board (31), wherein the FPC boards (31) are mounted on the inner wall of the cap portion (22) according to curvature of the inner wall of the cap portion (22) for the LEDs (32) on the FPC boards (31) to be attached to and align with the see-through portions (223) of the cap portion (22) and light emitted from the two FPC boards (31) passes through the see-through portion (223) and directs to a forward direction and a backward direction;
a power supply (4) electrically connected to the circuit board (7) to supply power to and light up the LEDs (32) of the FPC boards (31); and
a control switch (5) mounted on the holding portion (21) of the body (2), and electrically connected to the circuit board (7) to control the FPC boards (31)to turn on or off.

2. The bicycle warning lamp as claimed in claim 1, wherein
the holding portion (21) has multiple sleeves (213) made of metal, inserted into the holding portion (21) through the outer end (212), extending inwards, and internally threaded;
the cap portion (22) has multiple bands (222) formed on an inner wall of the cap portion (22) with multiple through holes (225) respectively formed through the multiple bands (222) and corresponding to the multiple sleeves (213); and
multiple screws are mounted through the through holes (225) of the multiple bands (222) and the sleeves (213) to securely mount the cap portion (22) on the outer end (212) of the holding portion (21).

3. The bicycle warning lamp as claimed in claim 2, wherein the holding portion (21) has two ring-shaped seals (214, 215) formed on and protruding from an inner wall of the holding portion (21) and being respectively adjacent to the inner end (211) and the outer end (212) of the holding portion (21) for preventing water from entering the body (2) through the inner end (211) of the holding portion (21) and through a junction between the holding portion (21) and the cap portion (22).

4. The bicycle warning lamp as claimed in claim 3, wherein the control switch (5) is mounted on the holding portion (21) and is adjacent to the inner end (211) of the holding portion (21).

5. The bicycle warning lamp as claimed in claim 4, further comprising a socket connector (6) mounted on the cap portion (22) and electrically connected to the power supply (4) through the circuit board (7) to further connect to another socket connector (6) for charging the power supply (4).

## Patentansprüche

1. Warnleuchte für ein Fahrrad, angepasst, um an jeder von zwei Lenkstangen (1) eines Fahrrads befestigt zu werden, wobei jede Lenkstange (1) eine Hohlstange (11), ein Anschlussende (111) und ein freies Ende (112) aufweist, wobei das Anschlussende (111) mit einem Rahmen des Fahrrads verbunden ist und das freie Ende (112) dem Anschlussende (111) gegenüberliegt, **dadurch gekennzeichnet, dass** die Warnleuchte Folgendes umfasst:
einen Körper (2), der aufweist:
einen Halteabschnitt (21), der angepasst ist, um um die Hohlstange (11) jeder Lenkstange (1) des Fahrrads herum befestigt zu werden, und aufweist:
ein inneres Ende (211), das angepasst ist, um dem Anschlussende (111) der Lenkstange (1) zu korrespondieren, und
ein äußeres Ende (212), das angepasst ist, um dem freien Ende (112) der Lenkstange (1) zu korrespondieren, und
einen Kappenabschnitt (22), der mit dem äußeren Ende (212) des Halteabschnitts (21) des Körpers (2) verbunden ist und aufweist:
eine Befestigungskammer (221), die innerhalb des Kappenabschnitts (22) definiert ist,
zwei Trennplatten (224), wobei jede Trennplatte (224) innerhalb des Kappenabschnitts (22) montiert ist, um einen Einsetzraum in der Befestigungskammer (221) und zwischen der Innenwand des Kappenabschnitts (22) und der Trennplatte (224) zu definieren, und
zwei Durchsichtabschnitte (223), die gegenüberliegend an einem äußeren Rand des Kappenabschnitts gebildet sind,
eine Schaltplatte (7), die innerhalb der Befestigungskammer (221) des Kappenabschnitts (22) befestigt ist,
zwei flexible Leiterplatten (FPC flexible printed circuit) (31), wobei jede FPC-Platte innerhalb des einen der zwei Einsetzräume in dem Kappenabschnitt (22) montiert ist, elektrisch mit der Schaltplatte (7) verbunden ist und verschiedene Leuchtdioden (LED) (32) aufweist, die auf der FPC-Platte (31) montiert sind, wobei die FPC-Platten (31) an der Innenwand des Kappenabschnitts (22) gemäß der Krümmung der Innenwand des Kappenabschnitts (22) für die LEDs (32) auf der FPC-Platte (31), an die sie angeschlossen werden sollen, montiert sind und mit den Durchsichtabschnitten (223) des Kappenabschnitts (22) ausgerichtet sind, und Licht, das von den beiden FPC-Platten (31) abgestrahlt wird, durch die Durchsichtabschnitte (223) strahlt und in eine Vorwärtsrichtung und eine Rückwärtsrichtung gerichtet ist,
eine Stromquelle (4), die elektrisch mit der Schaltplatte (7) verbunden ist, um die LEDs (32) der FPC-Platten (31) mit Energie zu versorgen und zu beleuchten, und
einen Steuerschalter (5), der auf dem Halteabschnitt (21) des Körpers (2) befestigt ist und elektrisch mit der Schaltplatte (7) verbunden ist, um die FPC-Platten (31) zum Ein- und Ausschalten zu steuern.

2. Warnleuchte für ein Fahrrad nach Anspruch 1, bei welcher
der Halteabschnitt (21) mehrere Hülsen (213) aus Metall aufweist, die in den Halteabschnitt (21) durch das äußere Ende (212) eingesetzt sind, sich nach innen erstrecken und mit einem Innengewinde versehen sind,
der Kappenabschnitt (22) mehrere Bänder (222) aufweist, die an der Innenwand des Kappenabschnitts (22) mit mehreren Durchgangsöffnungen (225) gebildet sind, die jeweils durch die mehreren Bänder (222) gebildet sind und den mehreren Hülsen (213) entsprechen, und
bei welcher mehrere Schrauben durch die Durchgangsöffnungen (225) der mehreren Bänder (222) und die Hülsen (213) montiert sind, um den Kappenabschnitt (22) an dem äußeren Ende (212) des Halteabschnitts (21) sicher anzuordnen.

3. Warnleuchte für ein Fahrrad nach Anspruch 2, bei welcher
der Halteabschnitt (21) zwei ringförmige Richtungen (214, 215) aufweist, die auf und hervorstehend von einer Innenwand des Halteabschnitts (21) gebildet sind und jeweils dem inneren Ende (211) und dem äußeren Ende (212) des Halteabschnitts (21) benachbart sind, um Eindringen von Wasser in den Körper (2) durch das innere Ende (211) des Halteabschnitts (21) und durch eine Verbindung zwischen dem Halteabschnitt (21) und dem Kappenabschnitt (22) zu verhindern.

4. Warnleuchte für ein Fahrrad nach Anspruch 3, bei welcher
der Steuerschalter (5) an dem Halteabschnitt (21) montiert ist und dem inneren Ende (211) des Halteabschnitts (21) benachbart ist.

5. Warnleuchte für ein Fahrrad nach Anspruch 4, ferner umfassend einen Steckverbinder (6), der an dem Kappenabschnitt (22) montiert ist und elektrisch mit der Stromquelle (4) durch die Schaltplatte (7) verbunden ist, um ferner mit einem weiteren Streckverbinder (6) zum Laden der Stromquelle (4) verbunden zu werden.

## Revendications

1. Lampe de signalisation pour bicyclette conçue pour être montée sur chacune des deux poignées de guidon (1) d'une bicyclette, dans laquelle chaque poignée de guidon (1) comporte une barre creuse (11), une extrémité de raccordement (111) et une extrémité libre (112), l'extrémité de raccordement (111) est raccordée à un cadre de la bicyclette, et l'extrémité libre (112) est opposée à l'extrémité de raccordement (111), **caractérisée en ce que** la lampe de signalisation comprend:
un corps (2) comportant
une partie de maintien (21) conçue pour se monter autour de la barre creuse (11) de chaque poignée de guidon (1) de la bicyclette et comportant:
une extrémité interne (211) conçue pour correspondre à l'extrémité de raccordement (111) de la poignée de guidon (1); et
une extrémité externe (212) conçue pour correspondre à l'extrémité libre (112) de la poignée de guidon (1); et
une partie de capuchon (22) raccordée à l'extrémité externe (212) de la partie de maintien (21) du corps (2) et comportant:
une chambre de montage (221) définie à l'intérieur de la partie de capuchon (22);
deux plaques de séparation (224), chaque plaque de séparation (224) étant montée à l'intérieur de la partie de capuchon (22) pour définir un espace d'insertion dans la chambre de montage (221) et entre la paroi interne de la partie de capuchon (22) et la plaque de séparation (224); et
deux parties transparentes (223) formées de façon opposée sur une périphérie de la partie de capuchon;
une carte de circuit (7) montée à l'intérieur de la chambre de montage (221) de la partie de capuchon (22);
deux cartes de circuit imprimé souple (FPC flexible printed circuit) (31), chaque carte de circuit imprimé souple étant montée à l'intérieur du ou des deux espaces d'insertion dans la partie de capuchon (22), électriquement connectées à la carte de circuit (7), et comportant plusieurs diodes électroluminescentes (DEL) (32) montées sur la carte de circuit imprimé souple (31), dans laquelle les cartes de circuit imprimé souple (31) sont montées sur la paroi interne de la partie de capuchon (22) selon la courbure de la paroi interne de la partie de capuchon (22) pour que les DEL (32) sur les cartes de circuit imprimé souple (31) soient fixées à, et s'alignent avec, les parties transparentes (223) de la partie de capuchon (22) et que la lumière émise à partir des deux cartes de circuit imprimé souple (31) passe à travers la partie transparentes (223) et se dirige vers une direction vers l'avant et une direction vers l'arrière;
une alimentation électrique (4) électriquement connectée à la carte de circuit (7) pour alimenter en énergie et allumer les DEL (32) des cartes de circuit imprimé souple (31); et
un interrupteur de commande (5) monté sur la partie de maintien (21) du corps (2), et électriquement connecté à la carte de circuit (7) pour commander les cartes de circuit imprimé souple (31) pour l'allumage et l'extinction.

2. Lampe de signalisation pour bicyclette selon la revendication 1, dans laquelle la partie de maintien (21) comporte de multiples manchons (213) constitués de métal, insérés dans la partie de maintien (21) à travers l'extrémité externe (212), s'étendant vers l'intérieur, et filetés à l'intérieur;
la partie de capuchon (22) comporte de multiples bandes (222) formées sur une paroi interne de la partie de capuchon (22) avec plusieurs trous traversants (225) formés respectivement à travers les multiples bandes (222) et correspondant aux multiples manchons (213); et
de multiples vis sont montées à travers les trous traversants (225) des multiples bandes (222) et les manchons (213) pour monter solidement la partie de capuchon (22) sur l'extrémité externe (212) de la partie de maintien (21).

3. Lampe de signalisation pour bicyclette selon la revendication 2, dans laquelle la partie de maintien (21) comporte deux joints toriques (214, 215) formés sur et dépassant d'une paroi interne de la partie de maintien (21) et respectivement adjacents à l'extrémité interne (211) et à l'extrémité externe (212) de la partie de maintien (21) pour empêcher l'eau de pénétrer dans le corps (2) à travers l'extrémité interne (211) de la partie de maintien (21) et à travers une jonction entre la partie de maintien (21) et la partie de capuchon (22).

4. Lampe de signalisation pour bicyclette selon la revendication 3, dans laquelle l'interrupteur de commande (5) est monté sur la partie de maintien (21) et est adjacent à l'extrémité interne (211) de la partie de maintien (21).

5. Lampe de signalisation pour bicyclette selon la revendication 4, comprenant en outre un connecteur de type fiche (6) monté sur la partie de capuchon (22) et électriquement connecté à l'alimentation électrique (4) par le biais de la carte de circuit (7) pour se connecter encore à un autre connecteur de type fiche (6) pour charger l'alimentation électrique (4).
